# EUROPEAN PATENT APPLICATION

(11) **EP 2 892 239 A1**
(43) Date of publication of application: **08.07.2015**
(21) Application number: 15150130.1
(22) Date of filing: 05.01.2015
(51) Int. Cl.: H04N 21/41, G02B 6/42

(54) **Living room computer with small form-factor pluggable port**

(30) Priority: 06.01.2014 US 201461924117 P
(71) Applicant: Synowiec, Christian, 8302 Kloten (CH)
(72) Inventor: Synowiec, Christian, 8302 Kloten (CH)
(74) Representative: Pawlowski, Adam

(57) **Abstract**

In one embodiment, the living room computer includes a housing, the housing including a small form-factor pluggable (SFP) port, a SFP cage coupled to the SFP port, the SFP cage configured to receive a SFP transceiver, a flat-panel display screen coupled to the housing, and a main board coupled to the flat-panel display screen. The SFP cage is configured to communicate with both optical fiber and copper wire networks. The main board includes a processor, a memory, and an SFP interface coupled to the SFP cage and to the processor. The processor is configured to receive data from the SFP interface and process the data for display on the flat-panel display screen. In one embodiment, the main board includes a wireless module and the processor is configured to process data received from the SFP interface for transmission by the wireless module, and the memory includes software executable by the processor such that the living room computer operates as an IEEE 802.11 access point.

## Description

### TECHNICAL FIELD

This invention relates generally to computing devices and more specifically to a living room computer.

### BACKGROUND

Until fairly recently, consumer televisions (TV's) have been only capable of doing one thing: displaying audio-visual data from either a cable, satellite, or other transmission source. In the late-2000's, TV's capable of browsing the Internet started becoming available in the consumer marketplace. These internet-capable or internet-ready TV's are commonly referred to as "smart TV's." A significant drawback of current smart TV's is that they are not true real-time multi-tasking devices. With a smart TV, the user can only browse the internet and watch a TV program simultaneously by using the picture-in-picture (PIP) feature for the TV program. The user cannot access the internet via a browser window running in the PIP feature of a smart TV while watching a TV program or other video in the main portion of the screen. Further, a smart TV is not capable of simultaneously running multiple software applications with multiple application windows being displayed on the screen at the same time. Current smart TV's simply lack the processing power, hardware, and software necessary to allow a user to watch a TV program, check the weather, respond to emails, and control Wi-Fi enabled home appliances all at the same time.

Some consumers have relied upon the use of an all-in-one personal computer (PC) or home theatre PC to address the shortcomings of modern smart TV's. An all-in-one desktop computer can be used to view video streamed from over the internet while running other applications. But such PCs lack High-Definition Multimedia Interface (HDMI) inputs to enable reception of data from modern electronic devices using HDMI outputs, thus limiting their suitability for entertainment applications.

### SUMMARY

The Living Room Computer (LRC) offers an all-in-one entertainment and computing device. The LRC is capable of displaying high-definition audiovisual data from a plurality of HDMI sources and executing various applications such as web browsing, email, video chat, and SMS messaging. In one embodiment, the LRC includes a flat panel display, a processor that executes an operating system, a plurality of HDMI inputs, a small form-factor pluggable (SFP) cage, a wireless module with Wi-Fi and Bluetooth functionality, and a mass storage device. The SFP cage is configured to receive a SFP transceiver for connection to an optical fiber network or a copper wire network. The SFP cage enables the LRC to be coupled directly to an optical network or other high speed computer network without an intervening router or gateway.

In one embodiment, an image processing unit of the processor of the LRC creates a multilayered display that includes a control and/or application layer, which includes a control/notification layer and a plurality of application layers, and a video layer. The multilayered display enables a user to simultaneously view video from an HDMI source and notifications and application windows for various applications. For example, a user can be notified of an new email message and open an email application to view the email message while continuing to watch a movie.

In one embodiment, the LRC display includes a control menu that is accessible from any screen. The control menu includes application link icons that a user can select to launch applications, so that the user can launch applications without needing to first navigate to an operating system application screen. Application link icons can be added to or removed from the control menu by dragging and dropping them from an operating system application screen. In one embodiment, the control menu is hidden at the top of the display until a cursor is positioned at the top of the display for a predetermined time.

In one embodiment, the LRC enables a user to navigate between various display screens using a swipe of a cursor under control of a mouse. For example, a user may swipe horizontally, both left and right, to switch between displays of video data from a plurality of HDMI sources (e.g., HDMI 1, HDMI2, HDMI 3), a home screen, an application screen, and a file manager screen. When swiping between a display of an HDMI source and an application screen, the LRC will pause the playback of audiovisual data from the HDMI source and begin displaying the application screen. If the user swipes back to the display of the HDMI source, playback of the audiovisual data automatically resumes.

In one embodiment, the LRC plays back multiple audio streams simultaneously. For example, the LRC may playback audio from an HDMI source from built-in speakers and at the same time transmit audio from another source, for example a music streaming service, to a Bluetooth speaker.

In one embodiment, the LRC can send and receive SMS messages. Each LRC has a unique device identifier that is associated with a fixed number that can be used to address a SMS message. The LRC communicates over a computer network to a messaging server to send and receive SMS messages. The messaging server can send SMS messages between one or more LRC's without use of a wireless carrier's network, and can also communicate with an SMS server. The SMS server includes a SIM card associated with a wireless carrier and can send and receive messages over the wireless carrier's network. An SMS message from a mobile device addressed to the LRC will be received by the SMS server, which then sends the message to the messaging server. The messaging server then sends the SMS message to the LRC.

### BRIEF DESCRIPTION OF THE DRAWINGS

FIG. 1 is a front perspective diagram illustrating one embodiment of the main hardware components of the Living Room Computer (LRC).
FIG. 2 is a schematic diagram of one embodiment of the LRC main board and related components.
FIG. 3 is a block diagram of one embodiment of the main board of the LRC.
FIG. 4 is a block diagram of one embodiment of a LRC subsystem for hardware acceleration to enable real-time processing of video data streams.
FIG. 5 is a schematic representation of one embodiment of a process for generating a multilayered application surface within the LRC.
FIG. 6 illustrates one embodiment of multiple image layers that can be generated by the operating system of the LRC.
FIG. 7 illustrates a combination of a real-time video image layer with an interactive multilayered application and/or control layer according to one embodiment of the invention.
FIG. 8 illustrates the behavior and response of a click on clickable areas of the LRC display according to one embodiment of the invention.
FIG. 9 is a flowchart of method steps for providing HDMI input data and application data to a processor for simultaneous display on a flat panel display, according to one embodiment of the invention.
FIGS. 10 &11 illustrate changing a selected display input of the LRC by swiping to the left or right according to one embodiment of the invention.
FIG. 12 is a schematic representation of one embodiment of a control menu of the LRC.
FIG. 13 is a schematic representation of one embodiment of adding an application link to the control menu of the LRC.
FIG. 14 is a flowchart of method steps for handling multiple audio streams from the LRC, according to one embodiment of the invention.
FIG. 15 is a flowchart of method steps for processing video data through an operating system, according to one embodiment of the invention.
FIG. 16 is a flowchart of method steps for time shifting the display of video, according to one embodiment of the invention.
FIG. 17 is a flowchart of method steps for time shifting the display of video, according to another embodiment of the invention.
FIG. 18 is a flowchart of method steps for displaying and recording video, according to one embodiment of the invention.
FIG. 19 is a flowchart of method steps for delaying a video stream, according to one embodiment of the invention.
FIG. 20 is a flowchart of method steps for transmitting a message to the LRC using a short messaging service (SMS), according to one embodiment of the invention.
FIG. 21 is a flowchart of method steps for transmitting a SMS message from the LRC, according to one embodiment of the invention.
FIG. 22 is a flowchart of method steps for navigating the display panels of the LRC by swiping to the left or right, according to one embodiment of the invention.
FIG. 23 is a flowchart of method steps for pausing the streaming of audiovisual data from HDMI input sources, according to one embodiment of the invention.
FIG. 24 is a flowchart of method steps for pausing and resuming the streaming of audiovisual data from HDMI input sources, according to one embodiment of the invention.

### DETAILED DESCRIPTION

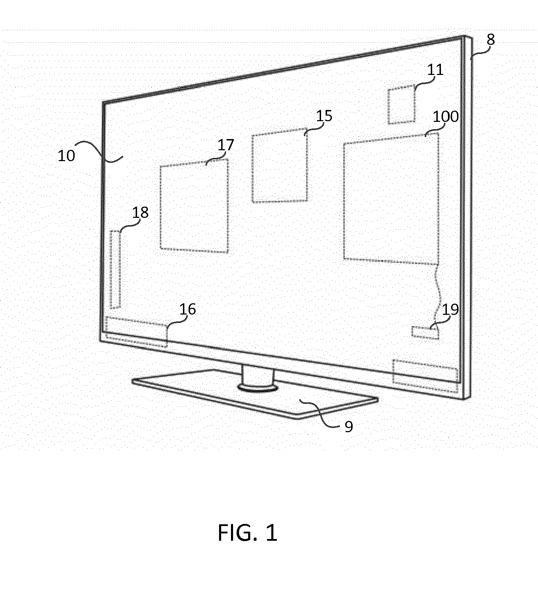

FIG. 1 shows the main hardware components of one embodiment of the Living Room Computer (LRC). A flat panel display 10 is assembled together with a housing 8 and base 9 for fixing flat panel display 10 in a vertical position. Flat panel display 10 can be, but is not limited to, an LED backlit display, a Direct LED backlit (DLED) display, or an Organic LED backlit (OLED) display. Flat panel display 10 preferably has a diagonal length greater than 30", and may have a resolution of 1920x1080 pixels, 3840x2160 pixels, or more. Flat panel display 10 is directly connected to a display interface on a main board 100. Audio speakers 16, including but not limited to a left speaker and right speaker for stereo sound, are affixed to the housing 8. A subwoofer 17 may be connected separately to an amplifier on main board 100 or in series with one of audio speakers 16.

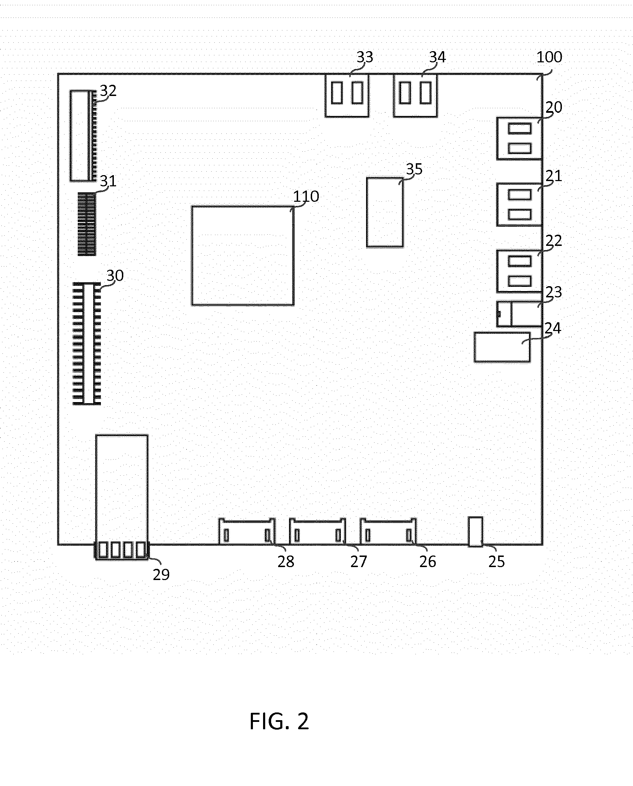

A power supply 15 supplies necessary power to main board 100 and a mass storage device 11 and other components, if necessary. Power supply 15 is configured to connect to an external power source of 100-240V. Mass storage device 11 can be, but is not limited to, a hard disk drive (HDD), a solid-state drive (SSD), a hybrid HDD-SDD, and/or a dual HDD-SSD. Mass storage device 11 can be connected with a data cable over Serial Advanced Technology Attachment (SATA), or a different compatible connector to main board 100. A power input of mass storage device 11 may be connected to power supply 15 or directly to main board 100. Main board 100 may include external connectors, such as Universal Serial Bus (USB) connectors and others as further described below in conjunction with FIG. 2.

A set of input keys 18 are located on the back side of housing 8. Actuation of input keys 18 may trigger Sleep Mode, Mute Audio, Audio Volume up and down, and other user-controllable functionalities of the LRC. Input keys 18 are connected to an input key connector 31 on main board 100 as shown in FIG. 2. The LRC may also include one or more antennas 19 for transmitting and receiving wireless signals, for example Wi-Fi and/or Bluetooth. The LRC may also include a video camera (not shown).

In the FIG. 1 embodiment, a set of three High Definition Multimedia Interface (HDMI) input ports (not shown) are also located on the back side of housing 8. Each of the HDMI input ports is capable of being coupled to an HDMI output of any other HDMI-compliant device, such as a Blu-ray player or video game console. An audio jack (not shown) may also be located on the back side of housing 8 for connection to external headphones. A port for an SFP cage, further discussed below in conjunction with FIG. 2, is also located on the back of housing 8.

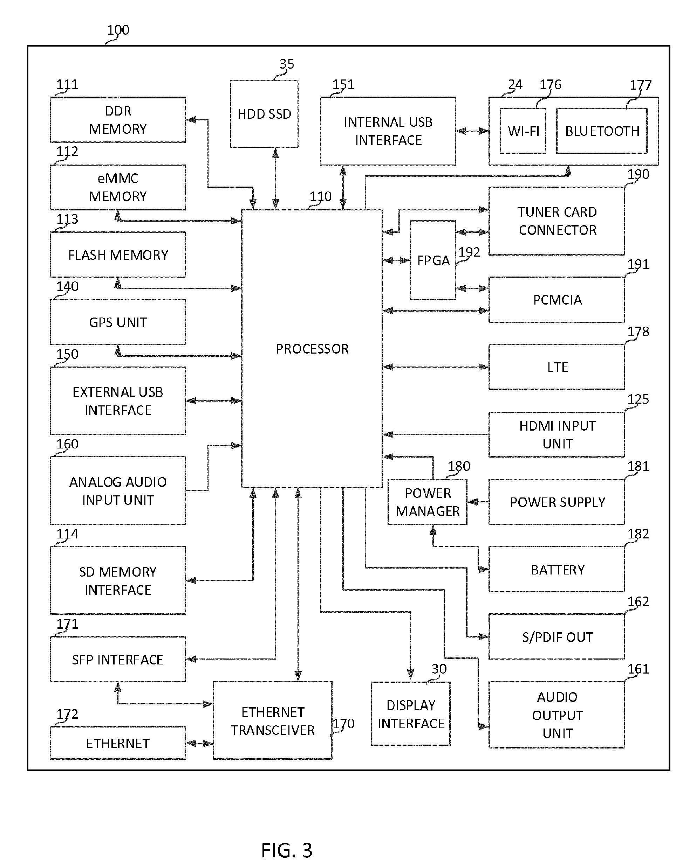

FIG. 2 is a schematic diagram of one embodiment of main board 100 of FIG. 1 and related components. In the FIG. 2 embodiment, main board 100 includes a set of data connectors 35 for connecting main board 100 to mass storage device 11. Main board 100 includes a processor 110, which is further discussed below in conjunction with FIG. 3. Main board 100 includes a display interface 30 for communicating with flat panel display 10. Display interface 30 can be, but is not limited to, a Low-Voltage Differential Signaling (LVDS) interface, and can drive a display resolution of 1920x1080 pixels, 3840x2160 pixels, or more, with a 24 bit, or more, RGB signal, and with a 60Hz, 120Hz, or more, refresh rate.

Main board 100 includes internal USB connectors 33 and 34, which can be used for the connection of a 2.4 GHz radio frequency (RF) remote control and 2.4 GHz RF wireless keyboard with touchpad and multi-touch operation. Main board 100 also includes external USB connectors 20, 21, and 22, such as USB 2.0 connectors, USB 3.0 connectors, or higher. External USB connectors 20, 21, and 22 may deliver up to 4 Amps of power, or greater, and can be used for charging mobile devices, to exchange and store data to mass storage device 11, and/or to exchange data with USB transceiver for a wireless mouse or keyboard. An optical connector 23 is an optical Sony/Philips Digital Interface Format (SPDIF) connector for multi-channel digital sound output, such as Dolby, DTS, or other sound output where the signal is not decoded and needs external decoding. Main board 100 may include an audio connector 25 coupled to an user-accessible audio jack for plugging in external headphones.

A wireless module 24 may be a Wi-Fi (IEEE 802.11), Wi-Fi and Bluetooth, Wi-Fi and Bluetooth Low Energy Module, or any other wireless transceiving device. Wireless module 24 can be connected to the USB, Secure Digital Input Output (SDIO), or another compatible interface of processor 110. Wireless module 24, equipped with one or more antennas 19, as described above in conjunction with FIG. 1, may be directly affixed to main board 100 or on a separate external board connected to main board 100.

A Small Form-Factor Pluggable (SFP) cage 29 enables direct connection of a broadband data output to main board 100. SFP cage 29 is coupled to an SFP port in housing 8. SFP cage 29 can be outfitted with a SFP transceiver for a fiber optic cable connection or a RJ45 jack for an Ethernet connection. SFP cage 29 enables the LRC to be connected to the Internet, or other network, such as a Local Area Network (LAN), Wide Area Network (WAN), or any other known network systems using known protocols for such systems, including TCP/IP, directly and without the use of any router, gateway, or switch. SFP cage 29 supports both active optical networks (AON) and passive optical networks (PON). An active optical network is an Ethernet infrastructure in which the physical transmission medium is optical fiber instead of copper wire. SFP cage 29 can be outfitted with a Gigabit Ethernet Fiber transceiver for connection to an active optical network. A passive optical network is a point-to-multipoint infrastructure that includes non-powered optical splitters. SFP cage 29 can be outfitted with a GPON transceiver that operates as a one-port optical line terminal/optical line unit (ONT/ONU) for connection to a passive optical network. SFP cage 29 outfitted with the SFP transceiver for a direct fiber-optic network connection has a bandwidth of 1.25 Gbps or more, provided that the Internet Service Provider (ISP) is capable of delivering such speeds. The LRC, receiving data through SFP cage 29 and associated SFP transceiver is capable of acting as a wireless access point (AP) through the wireless module 24 and antenna 19.

Main board 100 contains a set of HDMI input connectors 26, 27, and 28. HDMI input connectors 26, 27, and 28 are coupled to the three user-accessible HDMI ports on the back side of the LRC. HDMI input connectors 26, 27, and 28 are capable of receiving uncompressed video data and compressed/uncompressed digital audio data from any HDMI- complaint device. Main board 100 includes a connector 31 for providing wired interfaces to devices such as for example status indicators such as LEDs and keyboards, and a connector 32 coupled to power supply 15 to supply power to the components of main board 100.

FIG. 3 is a block diagram of one embodiment of main board 100 of FIG. 1. In the FIG. 3 embodiment, processor 110 is a low-power mobile processor, such as a Freescale i.MX6 Quad-Core 4 x 1.0Ghz processor. Processor 110 includes one or more Central Processing Units (CPU), one or more Graphical Processing Units (GPU), one or more Video Processing Units (VPU), and one or more Image Processing Units (IPU). Processor 110 is connected to a high-speed system Double-Data Rate (DDR) memory 111 and an embedded MultiMediaCard (eMMC) memory 112. DDR Memory 111 can be, but is not limited to, a DDR1, DDR2, or DDR3 memory. A flash memory 113 stores an operating system program and additional software programs, for example a web browser application and an email application.

A Secure Digital (SD) memory interface 114 is connected to an SD memory port (not shown) for connection to portable memory devices that may be used for additional storage. HDD SSD interface 35 is coupled to mass storage device 11. The capacity of each memory unit of the LRC is related to the specific requirements of a particular embodiment of the LRC and is not expressly limited.

A Global Positioning System (GPS) unit 140, such as a LOCOSYS AH-1613 GPS unit, can be used for geographic location purposes. GPS unit 140 may be connected to an External Interface Module (EIM) of processor 110 through a Universal Asynchronous Receiver/Transmitter (UART).

For connection to data networks, main board 100 includes a SFP interface 171 and Ethernet interfaces 172 and 170, which enable the transmission of network data to processor 110. SFP interface 171 is coupled to an SFP transceiver in SFP cage 29 (not shown) to enable communication between a SFP transceiver and processor 110. Data received via SFP interface 171 and Ethernet interfaces 172 and 170 may be processed by processor 110 and delivered as a viewable image to a flat panel display interface 30. In one embodiment, a connectivity service of an Android-based operating system includes connectivity manager types of Ethernet and SFP (e.g., ConnectivityManger.TYPE_Ethernet and ConnectivityManger.TYPE_SFP). In one embodiment, flash memory 113 stores software executable by processor 110 to enable the LRC to function as an IEEE 802.11 access point such that wireless devices can access a network via the SFP transceiver. In one embodiment, an Android-based operating system includes software to provide IEEE 802.11 access point ("Wi-Fi hot spot") functionality to the LRC.

Processor 110 is connected to an external USB interface 150, and a wireless module 24 through an internal USB interface 151. Wireless module 24 includes a Wi-Fi (IEEE 802.11) module 176 and a Bluetooth module 177. Data may be delivered to processor 110 over a digital tuner card connector 190, in cooperation with a Field-Programmable Gate Array (FPGA) module 192 and a Personal Computer Memory Card International Association (PCMCIA) module 191. Main board 100 may also include a Long-Term Evolution (LTE) wide area network module 178 to enable wireless communication with cellular data networks.

Main board 100 also includes an HDMI input unit 125 that is coupled to HDMI input connectors 26, 27, and 28 (not shown in FIG. 3). In one embodiment, HDMI input unit 125 includes a Silicon Image Sil9575 port processor and a Silicon Image Sil9233 HDMI receiver, and is used to convert an HDMI data signal received from one of HDMI input connectors 26, 27, 28 into a signal that can be processed by processor 110 through its integrated Camera Sensor Interface (CSI) channels. In another embodiment, HDMI input unit 125 is integrated into processor 110.

Processor 110 may be powered by energy from power supply 181, or, for limited periods of time, from a rechargeable battery 182. A power manager 180 may control the recharging process. When power supply 181 is not supplying power to processor 110, rechargeable battery 182 will deliver power to processor 110 to maintain date and time of the system. Power manager 180 may extend the active time of battery 182 by dynamically reducing processing tasks in processor 110.

All video application data received from any of the above mentioned connectors, modules, and/or interfaces will be processed by processor 110 and a visual image based upon the data will be delivered to flat panel display 10 through flat panel display interface 30. An audio signal may be delivered together with the video, or from an analog audio input unit 160, and will be processed and transmitted to an audio output unit 161 or digital output over an S/PDIF out 162. An audio signal may be transmitted to audio devices connected to a Bluetooth module 177 or external USB interface 150.

In one embodiment, the operating system stored in flash memory 113 of main board 100 is an Android-based operating system. In one embodiment, the operating system has a modified graphical user interface (GUI) with a customized launcher for better control and one click navigation and added control of video input sources. This operating system also has modified versions of various Android functionality services including but not limited to a selective remote Update service, selective Messaging Service including SMS, handling/processing multiple audio streams, video source input processing, HDD mounting, picture enhancement (brightness, contrast, gamma, color correction), multilayer management (on top display), flying widgets (allows standard widgets to be displayed on top and overlaid), overlaying/combining applications/notifications surfaces on external video streams, managing transparency of surfaces, lock service, multi-window operation, backup to HDD by user, HDMI Consumer Electronics Control (CEC) function, and picture-in-picture (two or more, allows multiple sources simultaneously, number limited by processing capabilities). This operating system also has modifications to the Android kernel, including but not limited to SFP drivers, Wi-Fi drivers, Bluetooth LE drivers, and LVDS drivers. The operating system also supports external source video/audio processing (such as HDMI). The operating system also generates a unique device identifier, which cannot be changed or modified, to allow digital identification of the LRC.

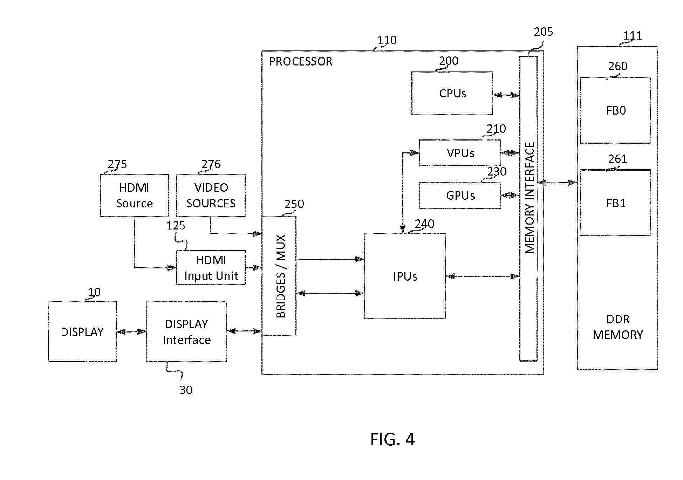

FIG. 4 is a block diagram of one embodiment of a LRC subsystem for hardware acceleration to enable real-time processing of video data streams. An HDMI source 275 and other video sources 270 (e.g., SFP interface 171 or Ethernet interface 172) supply video data to processor 110 for display on flat panel display 10. Video sources 270 may directly transmit video data to processor 110, or, in the case of HDMI source 275, to HDMI input unit 125. HDMI input unit 125 manages HDMI Consumer Electronics Control (HDMI-CEC), High-bandwidth Digital Content Protection (HDCP) decryption, and provides a converter to deliver a supported data format to processor 110. For example, as discussed above, HDMI input unit 125 converts HDMI data into a signal compatible with the CSI input of processor 110.

As previously described in FIG. 3, processor 110 may include one or more CPUs 200, one or more IPUs 240, one or more VPUs 210, and one or more GPUs 230. Video sources 270 may be directly connected to IPUs 240 through a multiplexing logic or bridge 250. IPUs 240 provide connectivity between video sources 270 and flat panel display 10, and handle related image processing, synchronization, and control tasks. VPUs 210 provide a video/image Coder-Decoder (CODEC) and GPUs 230 accelerate the generation of two-dimensional and three-dimensional vector graphics. IPUs 240, VPUs 210, and GPUs 230 allow Direct Memory Access (DMA). IPUs 240 handle the image processing by hardware and are equipped with control and synchronization capabilities, such as a DMA controller, display controller, and buffering and synchronization mechanisms. IPUs 240 perform these tasks with minimal involvement of CPUs 200, freeing the CPUs to perform other tasks.

A sensor interface of IPUs 240 receives video data from video sources 270 and prepares video data frames. The frames may be sent to a video de-interlacer and combiner (VDIC) module of IPUs 240, or directly to a frame buffer such as FB0 260 or FB1 261 inside DDR memory 111. The frame buffers may be read back for further processing. The VDIC module may convert an interlaced video stream into a progressive order and combine two video and/or graphics planes. IPUs 240 may be capable of feeding two or more video data streams into DDR memory 111 simultaneously.

FB1 261 may act as real-time video layer for further processing. Video data stored in FB1 261 may be color space converted, image enhanced, and sent through the integrated display controller and display interface within IPUs 240 to flat panel display 10. The image processing ability of IPUs 240 may also include, but is not limited to, combining two video and/or graphics planes, resizing, image rotation, horizontal inversion, color conversion and/or correction (such as YUV-RGB conversions, brightness, contrast, color saturation, gray-scale, color inversion, sepia, blue-tone, hue-preserving gamut mapping), gamma correction, and contrast stretching. The transparent interactive multilayered application surface may be sent to FB0 260 for further processing. Video data in FB1 261 may be combined with video data in the second frame buffer FB0 260 by IPUs 240 for a multilayered display image, or to enable Picture-in-Picture (PIP) display image on flat panel display 10.

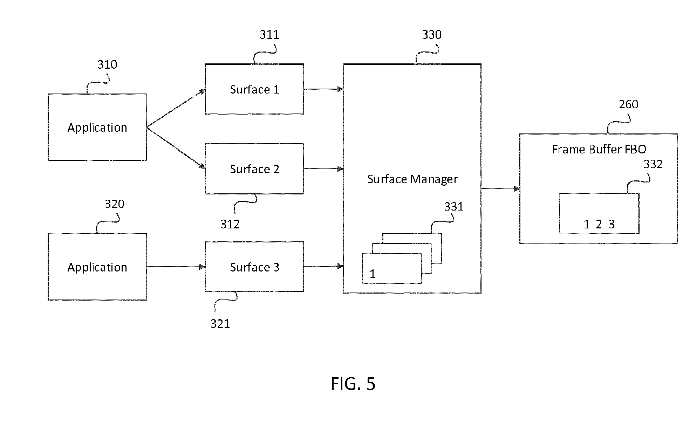

FIG. 5 is a schematic representation of one embodiment of a process for generating a multilayered application surface within the LRC. Applications 310 and 320 running on CPUs 200 of processor 110 generate surfaces 311, 312, and 321 (different layers) for display and input of information (interactive). Surfaces 311, 312, and 321 may be combined by a surface manager 330 of the operating system into a single frame 332 which is then stored to FB0 260 of DDR memory 111 prior to being displayed on flat panel display 10.

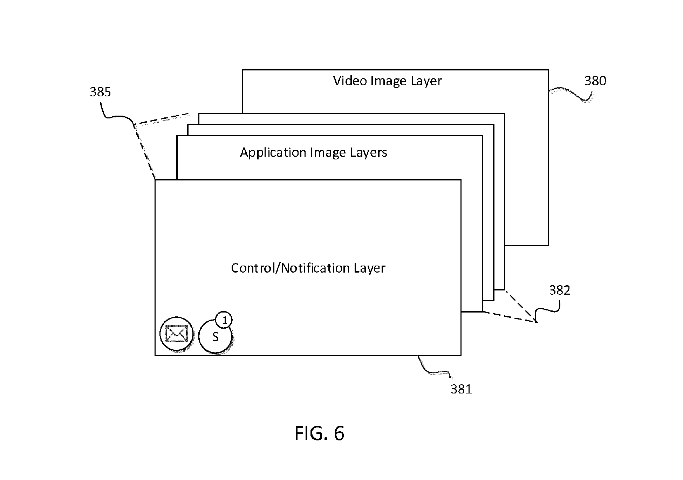

FIG. 6 shows one embodiment of multiple image layers that can be generated by the operating system. A number (0 to n) of application image layers 382 may be generated by applications running on processor 110. The surface manager 330 of the operating system combines a control/notification layer 381 which is always on top and the application image layers 382 into a multilayered application surface 385 (later to be referenced as application and/or control layer), which is then sent to FB0 260 in DDR memory 111 for further processing prior to being displayed. Control/notification layer 381 may include various notification icons. A video image layer 380 may be stored in FB1 261. A control/notification layer 381 may also be stored in FB0 260. IPUs 240 of processor 110 combine video image layer 380, and multilayered application and/or control layer 385 for display on flat panel display 10.

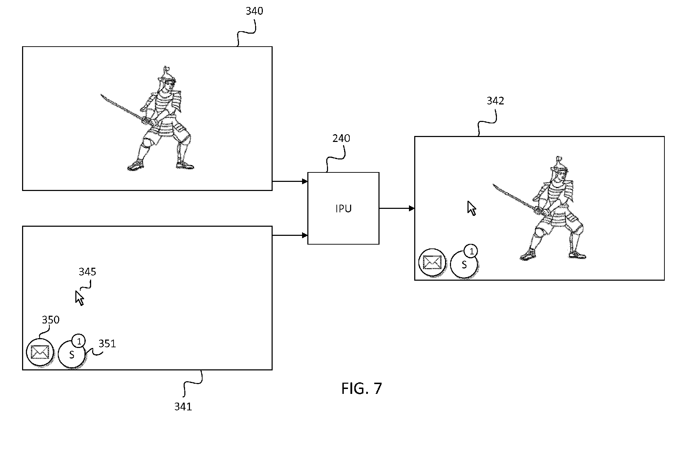

FIG. 7 illustrates a combination of a real-time video image layer 340 with an interactive multilayered application and/or control layer 341 according to one embodiment of the invention. A cursor 345 controlled by a wireless mouse enables a user to provide input via the GUI of interactive application and/or control layer 341. Application and/or control layer 341, which is stored in FB0 260, also shows notification icons 350 and 351. Notification icon 350 indicates that a new message for the user has been received by a messaging application. Notification icon 351 indicates that someone is trying to initiate a video call with the user, for example via the Skype® application. Video image layer 340 is a frame from a movie that is stored in FB1 261. IPU 240 retrieves video image layer 340 and application and/or control layer 341 from FB1 261 and FB0 260, respectively, and combines them into a display layer 342 that is sent to display interface 30 for display on flat panel display 10.

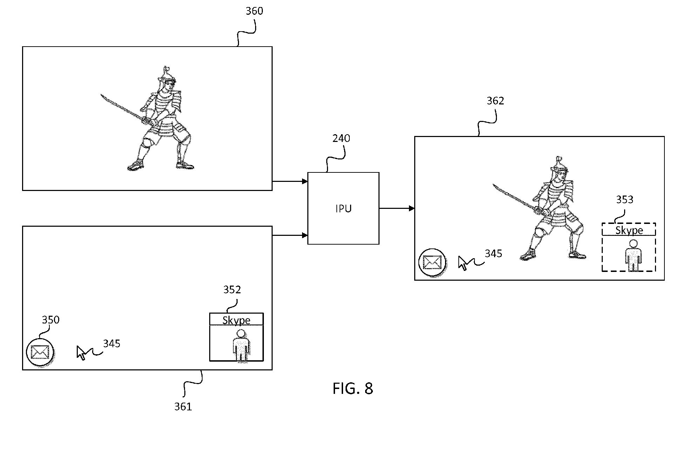

FIG. 8 illustrates the behavior and response of a click on clickable areas of the LRC display according to one embodiment of the invention. In the FIG. 8 embodiment, a video image layer 360 that is a frame of a movie is stored in FB1 261 and an application and/or control layer 361 is stored in FB0 260. As shown in application and/or control layer 361, the user has used cursor 345 to select the Skype® icon and launch the Skype® application. The application causes an application window 352 to appear in application and/or control layer 361. IPU 240 combines the application and/or control layer 361 and video image layer 360 into a display layer 362 for display on flat panel display 10. Display layer 362 enables the user to view the movie images while simultaneously engaging in a video call via the Skype® application. The Skype® application window 352 portion of application and/or control layer 361 has a transparency value associated with it such that it appears as a transparent application window 353 in display layer 362.

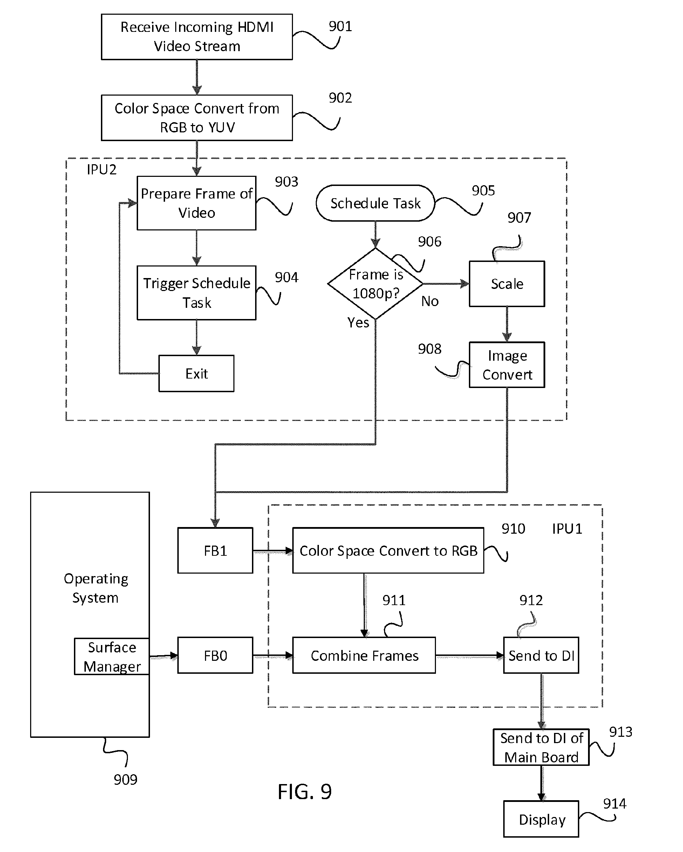

FIG. 9 is a flowchart of method steps for providing HDMI input data and application data to processor 110 for simultaneous display on flat panel display 10 according to one embodiment of the invention. In step 901, an incoming HDMI video stream in RGB 4:4:4 format is received at one of the HDMI input connectors 26, 27, 28 on main board 100. In step 902, HDMI input unit 125 color space converts (CSC) the incoming HDMI video stream to YUV 4:2:2 format for input into IPU2 240 of processor 110 via the CSI input port. In step 903, IPU2 240 receives the video data and prepares a frame of video. In step 904, the operating system initiates a schedule task for processing the incoming frame, delivers instructions to execute the schedule task to CPU2 200, and IPU2 240 performs the scheduled task to process the frame. IPU2 240 exits and the method returns to step 903 to process the next incoming frame of video. The loop of steps 903 and 904 is an interrupt routine because when the CSI is ready with a frame it triggers an interrupt. Thus to further process the frame a task must be scheduled. In step 905, the scheduled task to process a frame of video begins. In step 906, IPU2 240 determines whether the frame of video is a 1080p frame. If the frame is 1080p, the frame is stored in FB1 261 of DDR memory 111. If the frame is not 1080p, in steps 907 and 908 IPU2 240 image converts the frame into a 1080p frame and stores the scaled frame in FB1 261.

In step 909, the surface manager 330 of the operating system (such as the SurfaceFlinger (SF) of the Android operating system) outputs a multilayered application and/or control surface and stores it in FB0 260 of DDR memory 111. In step 910, the display processor (DP) of processor 110's IPU1 240 reads in the frame from FB1 261 and performs a CSC to convert the prepared frame from a YUV format back into a RGB format. In step 911, the display processor of IPU1 240 receives the multilayered application and/or control surface from FB0 260 and combines it with the RGB format frame from FB1 261 for input to a display interface of IPU1 240. In step 912, the display interface of IPU1 240 outputs the combined frame to display interface 30 of main board 100. In step 913, display interface 30 sends the combined frame to flat panel display 10. In step 914, flat panel display 10 displays the combined frame of video.

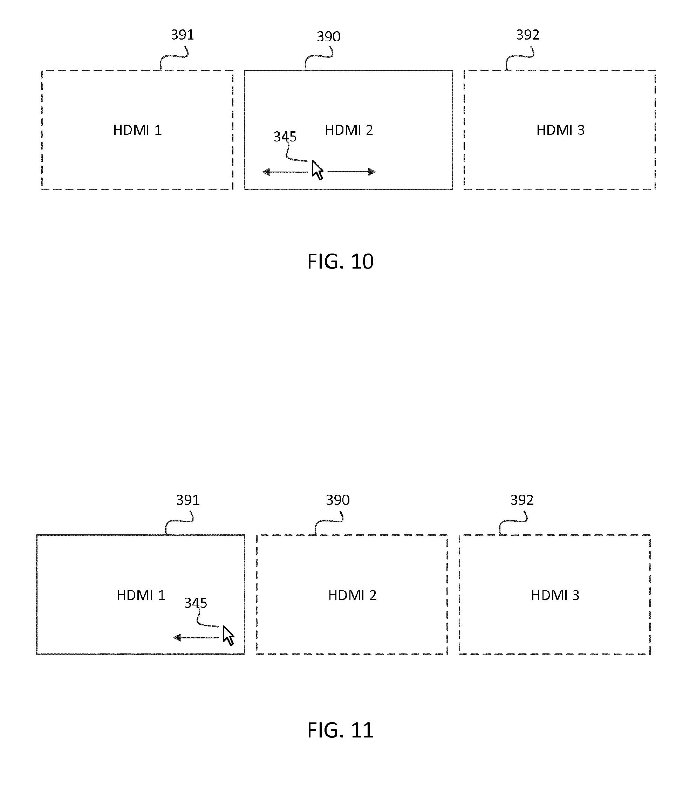

FIGS. 10 &11 illustrate changing the selected display input of the LRC by swiping the mouse to the left or right according to one embodiment of the invention. In the FIG. 10 embodiment, three HDMI input sources 391, 390, and 392 are connected to the LRC. HDMI input source 390 (HDMI 2) is currently selected for display on flat panel display 10. In response to clicking down on a mouse and dragging cursor 345 (swiping) to the left or the right of the display, HDMI input source 392 (HDMI 3) or HDMI input source 391 (HDMI 1) may be selected for display, respectively. In the FIG. 11 embodiment, HDMI input source 391 (HDMI 1) has been selected following a click and drag of cursor 345 to the left of the display. The operating system of the LRC will pause the playback of audiovisual data from HDMI source 390 and begin playback of audiovisual data from HDMI source 391.

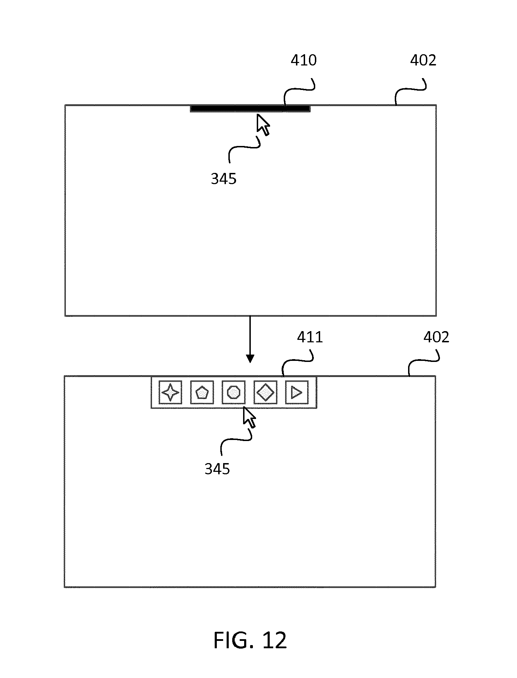

FIG. 12 is a schematic representation of one embodiment of a control menu of the LRC. A hidden control menu 410 is displayed as a colored line on an edge of a screen 400. Control menu 411 is displayed by placing cursor 345 over hidden control menu 410 for a predetermined amount of time. In one embodiment, the line representing hidden control menu 410 may decrease in length, corresponding with the time remaining before control menu 411 is displayed on screen 400. Control menu 411 may also be displayed in response to actuation of a button on a remote control device. Control menu 411 includes but is not limited to one or more application-link thumbnails ("shortcuts") for launching applications, a link to a settings menu, a link to a picture settings menu, and links to various sources such as HDMI inputs. Control menu 411 is included in the control/notification layer 381 and can be accessed while any screen is displayed on flat panel display 10.

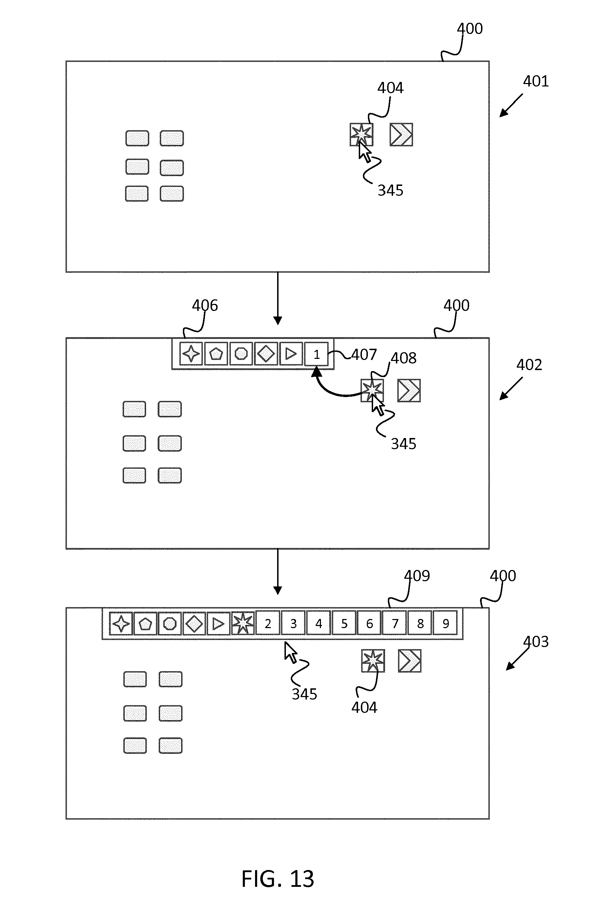

FIG. 13 is a schematic representation of one embodiment of adding an application link to the control menu of the LRC. An operating system screen 400 from which applications can be launched includes a plurality of application-link thumbnails. In step 401, cursor 345 may be positioned over fixed application-link thumbnail 404 which is to be added to the control menu of the LRC. In step 402, in response to a click and hold of a mouse, application-link thumbnail 404 changes from a fixed application-link thumbnail into a moveable application-link thumbnail 408. By moving moveable application-link thumbnail 408 over position 1 407 on control menu 406 and releasing the click and hold of the mouse, moveable application-link thumbnail 408 is copied to control menu 406 at position 1 407. In step 403, additional application-link thumbnails may be added to expanded control menu 409 by repeating the drag-and-drop process as described in steps 401 and 402. In one embodiment, expanded control menu 409 may have a number (0 to n) of positions for additional application-link thumbnails. In the FIG. 13 embodiment, after being added to the control menu, application-link thumbnail 404 continues to be shown on operating system screen 400. In one embodiment, items can be removed from control menu 406 by selecting and holding an item using cursor 345, or by dragging and dropping the item back to operating system screen 400.

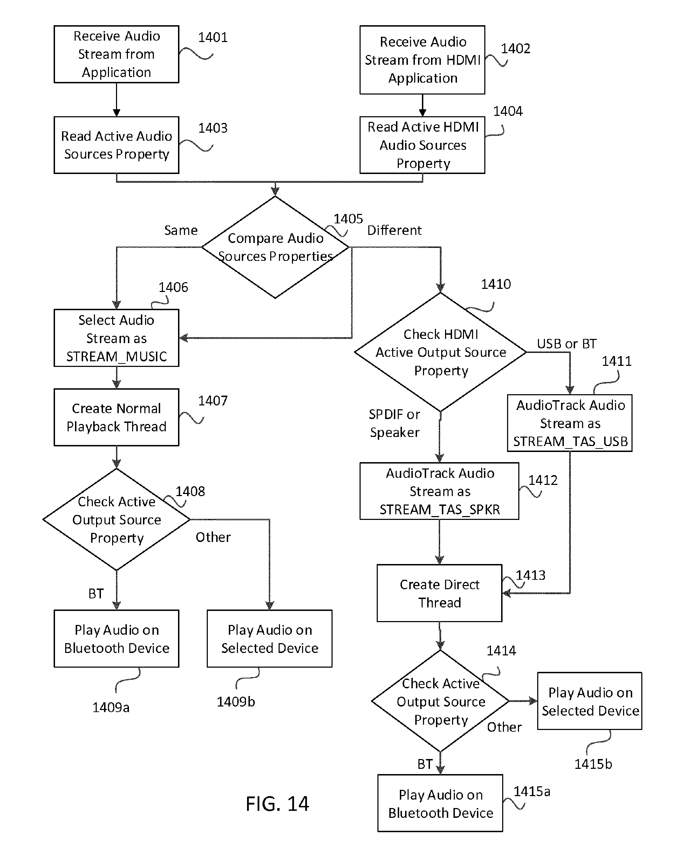

FIG. 14 is a flowchart of method steps for handling multiple audio streams for simultaneous playback of audio from the LRC, according to one embodiment of the invention. A multi-stream audio program operates in combination with the operating system's audio policy manager and audio player or media player to handle the multiple audio streams. In step 1401, the multi-stream audio program receives a first audio stream from an operating system application or program that plays sound or music. In step 1402, the multi-stream audio program receives a second audio stream containing audio data path information.] The second audio stream may be received from a HDMI-compatible device connected to one of HDMI input connectors 26, 27, 28 on main board 100, running a HDMI application or program that plays sound or music. In step 1403, the audio policy manager of the operating system (such as Android's AudioFlinger) reads the active audio sources property of the first audio stream. In step 1404, the audio policy manager of the operating system reads the active audio sources property of the second audio stream. In step 1405, the audio policy manager compares the active audio source properties of the first and second audio streams. If the active audio source properties for the first and second audio streams are the same, then in step 1406, the operating system's program that manages and plays audio (such as Android's AudioTrack or MediaPlayer programs) selects the first audio stream as STREAM_MUSIC, and the second audio stream is ignored. In step 1407, the operating system's audio policy manager (such as Android's AudioFlinger) takes the first audio stream and creates a playback thread. In step 1408, the audio policy manager reads and checks the output source property of the first audio stream. In step 1409a, if the output source property of the first audio stream is for a Bluetooth device, then an advanced audio distribution profile (A2DP) module will transmit the first audio stream via Bluetooth wireless module 177 to a Bluetooth compatible device. If the output source property is for USB, SPDIF, and/or speakers 16, then in step 1409b a tiny advanced Linux sound architecture (ALSA) module selects the audio output interface specified by the first audio stream's output source property (e.g., external USB interface 150, S/PDIF out 162, or audio output unit 161) and transmits the first audio stream to the selected interface.

If the active audio source properties of the first and second audio streams are different, the first audio stream is handled by the process as described in steps 1406-1409 and in step 1410 the audio policy manager determines the value of the active audio source property of the second audio stream. In step 1411, if the value of the audio source property of the second audio stream is USB or Bluetooth, then the program that manages and plays audio selects the second audio stream as STREAM_TAS_USB and the second audio stream is sent to the audio policy manager. In step 1412, if the value of the second audio source property is SPDIF or speakers 16, then the program that manages and plays audio selects the second audio stream as STREAM_TAS_SPKR and the second audio stream is sent to the audio policy manager. In step 1413, the audio policy manager creates a direct playback thread from the received second audio stream. In step 1414, the audio policy manager reads the output source property of the second audio stream and chooses the output device based on the output source property. In one embodiment, the audio policy manager is capable of handling one or more audio streams. If the output source property is for a Bluetooth device, then in step 1415a an advanced audio distribution profile (A2DP) module will transmit the second audio stream via a Bluetooth wireless module to a Bluetooth compatible device. If the output source property is for USB, SPDIF, or speakers 16, then in step 1415b a tiny advanced Linux sound architecture (ALSA) module selects the audio output interface specified by the second audio stream's output source property (e.g., external USB interface 150, S/PIF out 162, or audio output unit 161) and transmits the second audio stream to the selected interface.

In one embodiment of the process as described in FIG. 14, both the first and second audio streams may be simultaneously played from the same output device, such as a Bluetooth speaker, USB speaker, SPDIF speaker, or speakers 16 of the LRC. In another embodiment, the first and second audio streams may be simultaneously played from two different output devices. For example, the first audio stream may be played from a Bluetooth speaker or headset speaker while the second audio stream may be played from speakers 16 of the LRC. Thus a user can watch a movie from an HDMI source on the LRC's display screen while another user can listen to music from an on-line streaming music service using a Bluetooth headset. In another embodiment, more than two audio streams may be simultaneously played from the same output device, or different output devices.

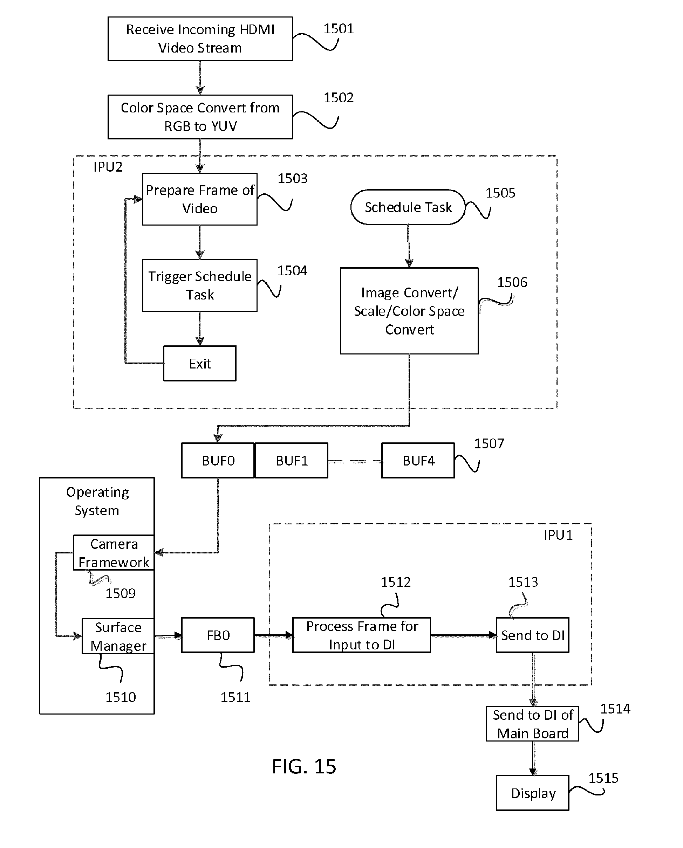

FIG. 15 is a flowchart of method steps for processing video data through an operating system, according to one embodiment of the invention. In step 1501, an incoming HDMI video stream in RGB 4:4:4 format is received at one of HDMI input connectors 26, 27, 28. In step 1502, HDMI input unit 125 color space converts the incoming HDMI video stream to YUV 4:2:2 format for input to an IPU2 240 of processor 110 via the CSI input port. In step 1503, IPU2 240 receives the video data and prepares the frames of video. In step 1504, the operating system initiates a schedule task for processing the incoming frame and delivers instructions to execute the schedule task to CPU2 200, and IPU2 240 performs the scheduled task to process the frame. IPU2 240 exits and returns to step 1503 to process the next incoming frame of video. In step 1505, the scheduled task to process a frame of video begins. In step 1506, IPU2 240 scales the frame to 1080p if needed, and color space converts the frame to an NV12 format or other format that is compatible with an Android-based operating system. In step 1507, IPU2 240 sends the frame to a set of buffers in DDR memory 111, which are separate from frame buffers FB0 260 and FB1 261. In step 1509, the camera framework (CF) of the operating system receives the video frame in NV12 format from the buffer. In step 1510, the surface manager of the operating system (e.g., the SurfaceFlinger of Android) outputs an RGB format video frame, which is combined/overlaid with other application layers and the top control/ notification layer (these other layers may be not shown) to FB0 260 of DDR memory 111. In step 1511, FB0 260 stores the RGB format frame until it is to be displayed. In step 1512, a display processor of an IPU1 240 of processor 110 fetches the RGB format video frame from FB0 260 and processes the frame for input to a display interface of IPU1 240. In step 1513, the display interface of IPU1 240 outputs the RGB frame to display interface 30 of main board 100. In step 1514, display interface 30 sends the frame to flat panel display 10. In step 1515, flat panel display 10 displays the frame of video.

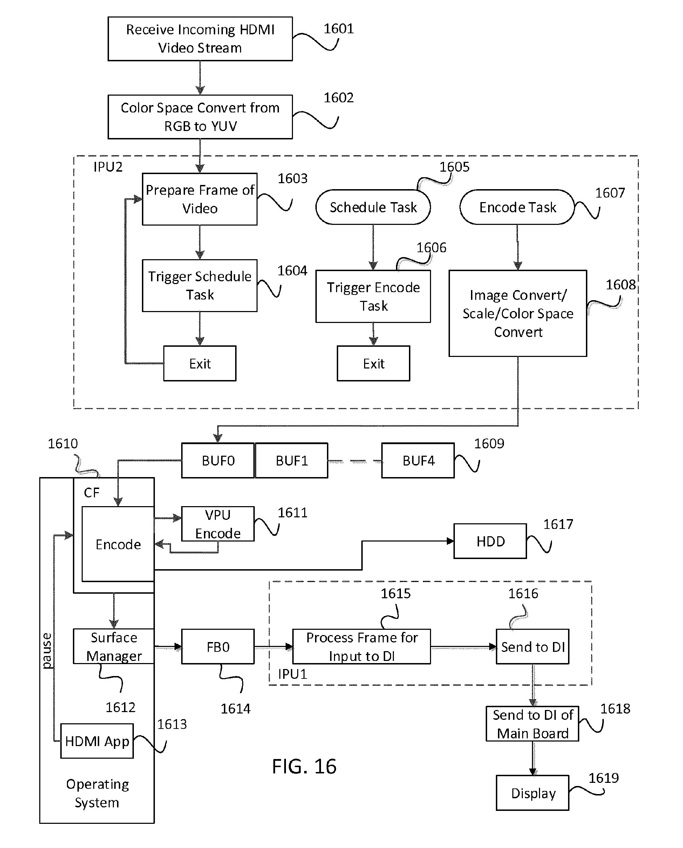

FIG. 16 is a flowchart of method steps for time shifting the display of video according to one embodiment of the invention. In step 1601, an incoming HDMI video stream in RGB 4:4:4 format is received at one of HDMI input connectors 26, 27, 28. In step 1602, HDMI input unit 125 color space converts the incoming HDMI video stream to YUV 4:2:2 format for input to an IPU2 240 of processor 110 via the CSI input port. In step 1603, IPU2 240 receives the video data and prepares the frames of video. In step 1604, the operating system initiates a schedule task for processing the incoming frame and sends instructions to execute the schedule task to CPU2 200, and IPU2 240 performs the scheduled task to process the frame. IPU2 240 exits and returns to step 1603 to process the next incoming frame of video. In step 1605, the scheduled task to process a frame of video begins. In step 1606, the operating system initiates an encode task for processing the frame and delivers instructions to execute the encode task to CPU2 200, and IPU2 240 performs the encode task to process the frame. In step 1607, the encode task begins. In step 1608, IPU2 240 scales the frame to 1080p if necessary and color space converts the frame to an NV12 format. In step 1609, IPU2 240 sends the frame to a set of buffers in DDR memory 111, which are separate from frame buffers FB0 260 and FB1 261.

If playback of the video has been paused by the user, in step 1613 an HDMI application of the operating system will send a pause signal to the camera framework of the operating system. If the camera framework has received a pause signal, in step 1610 an encoder, such as the Freescale OpenMAX encoder, of the camera framework of the operating system, encodes the frame of video for input to a VPU of processor 110. In step 1611, a VPU of processor 110 encodes the frame of video to an appropriate bandwidth for storage in DDR memory 11 and returns the encoded frame back to the camera framework. The camera framework then sends the encoded frame to mass storage 11. In step 1617, mass storage 11 stores the frame of data until it is fetched for display.

Returning to step 1610, when the camera framework receives the pause signal, the camera framework will send the most recent frame to a surface manager of the operating system. In step 1612, the surface manager of the operating system receives the frame of video and sends it to FB0 260 for storage. In step 1614, FB0 260 stores the frame until it is to be displayed. In step 1615, a display processor of an IPU1 240 of processor 110 fetches the video frame from FB0 260 and processes the frame for input to a display interface of IPU1 240. In step 1616, the display interface of IPU1 240 outputs the frame to display interface 30 of main board 100. In step 1618, display interface 30 sends the frame to flat panel display 10. In step 1619, flat panel display 10 displays the frame of video. Thus when a user pauses the display of HDMI video, the most recent frame is displayed as a static image on flat panel display 10 while the following frames are buffered and then stored in mass storage 11.

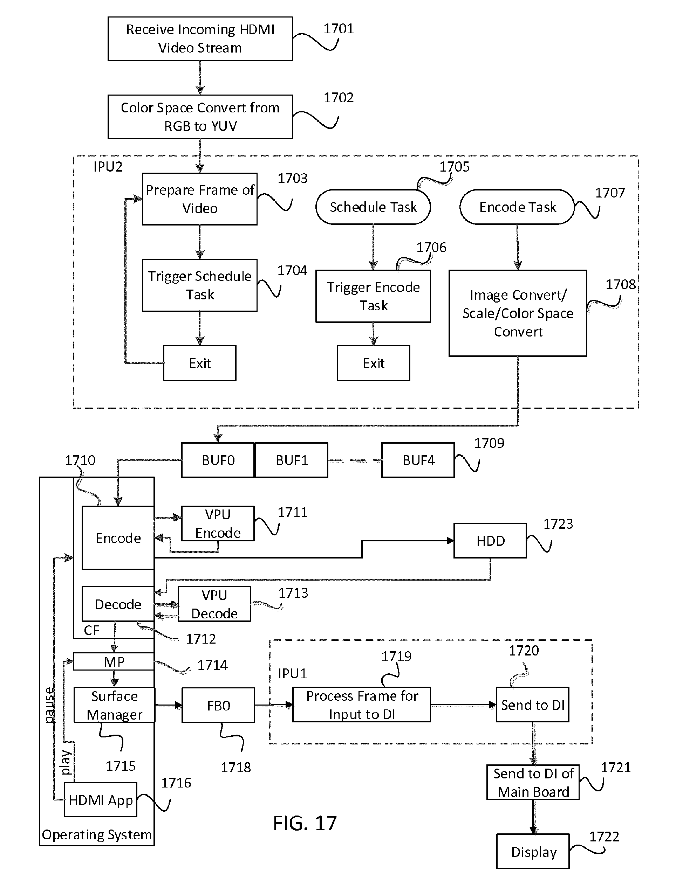

FIG. 17 is a flowchart of method steps for resuming playback of time shifted video according to one embodiment of the invention. In step 1701, an incoming HDMI video stream in RGB 4:4:4 format is received at one of HDMI input connectors 26, 27, 28. In step 1702, HDMI input unit 125 color space converts the incoming HDMI video stream to YUV 4:2:2 format for input to an IPU2 240 of processor 110 via the CSI input port. In step 1703, IPU2 240 receives the video data and prepares the frames of video. In step 1704, the operating system initiates a schedule task for processing the incoming frame and delivers instructions to execute the schedule task to CPU2 200, and IPU2 240 performs the scheduled task to process the frame. IPU2 240 exits and returns to step 1703 to process the next incoming frame of video. In step 1705, the scheduled task to process a frame of video begins. In step 1706, the operating system initiates an encode task for processing the frame and delivers instructions to execute the encode task to CPU2 200, and IPU2 240 performs the encode task to process the frame. In step 1707, the encode task begins. In step 1708, IPU2 240 scales the frame to 1080p if necessary and color space converts the frame to an NV12 format or other format appropriate for an Android-based operating system. In step 1709, IPU2 240 stores the frame in a set of buffers in DDR memory 111, which are separate from frame buffers FB0 260 and FB1 261.

If in step 1716 an HDMI application of the operating system sends a pause signal to the camera framework, then in step 1710 an encoder, such as the Freescale OpenMAX encoder, of the camera framework of the operating system, encodes the frame of video for processing by a VPU of processor 110. In step 1711, a VPU of processor 110 encodes the frame of video into a bandwidth appropriate for input to mass storage 11 and returns the encoded frame back to the camera framework. The camera framework then sends the encoded frame to mass storage 11. In step 1723, mass storage 11 stores the frame of data until it is fetched for display. If in step 1716 an HDMI application of the operating system sends a play signal to a media player of the operating system, the media player instructs a decoder of the camera framework to fetch the video frames from mass storage 11. In step 1712 the decoder, such as the Freescale OpenMAX decoder, of the camera framework fetches a frame of video from mass storage 11 and sends it to a VPU of processor 110. In step 1713 the VPU decodes the frame into the original frame bandwidth and returns it to the camera framework. In step 1714 the media player sends the decoded frame to the surface manager of the operating system. In step 1715 the surface manager sends the frame to FB0 260. In step 1718 FB0 260 stores the frame until it is to be displayed. In step 1719, a display processor of an IPU1 240 of processor 110 fetches the video frame from FB0 260 and processes the frame for input to a display interface of IPU1 240. In step 1720, the display interface of IPU1 240 outputs the frame to display interface 30 of main board 100. In step 1721, display interface 30 sends the frame to flat panel display 10. In step 1722, flat panel display 10 displays the frame of video.

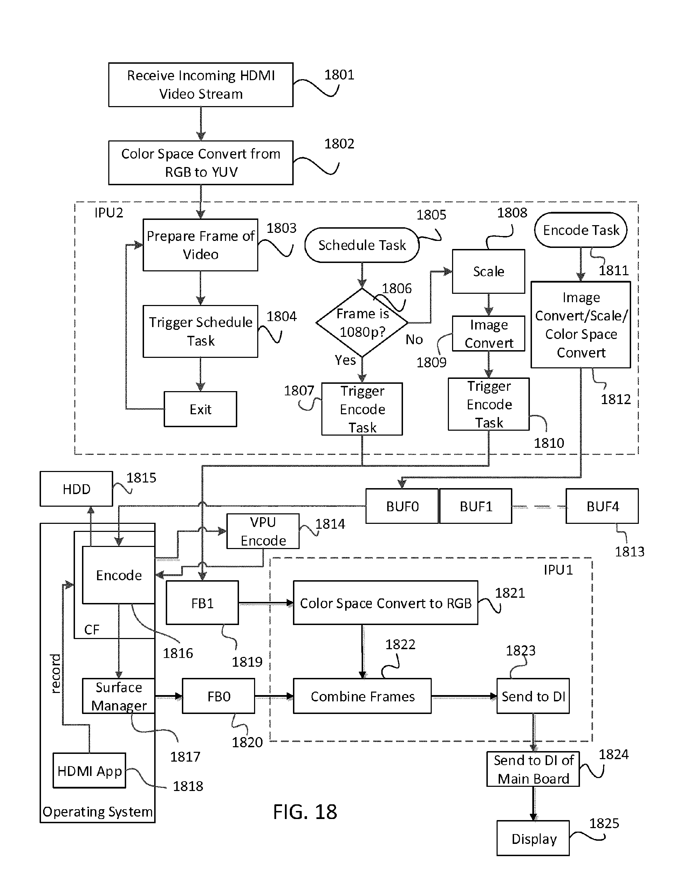

FIG. 18 is flowchart of method steps for displaying and recording video, according to one embodiment of the invention. In step 1801, an incoming HDMI video stream in RGB 4:4:4 format is received at one of HDMI input connectors 26, 27, 28. In step 1802, HDMI input unit 125 color space converts the incoming HDMI video stream to YUV 4:2:2 format for input to an IPU2 240 of processor 110 via the CSI input port. In step 1803, IPU2 240 receives the video data and prepares the frames of video. In step 1804, the operating system initiates a schedule task for processing the incoming frame and delivers instructions to execute the schedule task to CPU2 200, and IPU2 240 performs the scheduled task to process the frame. IPU2 240 exits and returns to step 1803 to process the next incoming frame of video. In step 1805, the scheduled task to process a frame of video begins. In step 1806, IPU2 240 determines whether the frame of video is a 1080p frame. If the frame is 1080p, the method continues with step 1807. If the frame is not 1080p, in steps 1808 and 1809 IPU2 240 scales the frame into a 1080p frame and the method continues with step 1810. In steps 1807 and 1810, the operating system initiates an encoding task for processing the frame and delivers instructions to execute the encode task to CPU2 200, and IPU2 240 performs the encode task to process the frame and sends the frame to FB1 261 of DDR memory 111. In step 1819 FB1 261 stores the frame until it is to be displayed.

In step 1811, the encode task begins. In step 1812, IPU2 240 color space converts the frame to an NV12 format or other format appropriate for an Android-based operating system and sends the frame to a set of buffers in DDR memory 111, which are separate from frame buffers FB0 260 and FB1 261. In step 1813 the buffers store the frame until it is fetched by the operating system. In step 1818 an HDMI application of the operating system sends a record signal to the camera framework of the operating system. In step 1816 an encoder of the camera framework fetches the frame from the buffers. In step 1814 a VPU of processor 110 encodes the frame into a bandwidth appropriate for storage into mass storage 11 and returns the encoded frame to the camera framework. The camera framework then sends the frame to mass storage 11. In step 1815 mass storage 11 stores the frame until it is fetched for playback.

In step 1817 the surface manager of the operating system sends a multilayer application surface to FB0 260. In step 1820, FB0 260 stores the multilayered application surface for display. In step 1821, the display processor of IPU1 240 fetches a frame of video from FB1 261 and color scale converts the frame into an RGB format. In step 1822 the display processor combines the RGB frame with a multilayered application surface fetched from FB0 260. In step 1823 a display interface of IPU1 240 outputs the combined frame to display interface 30 of main board 100. In step 1824, display interface 30 sends the combined frame to flat panel display 10. In step 1825, flat panel display 10 displays the combined frame.

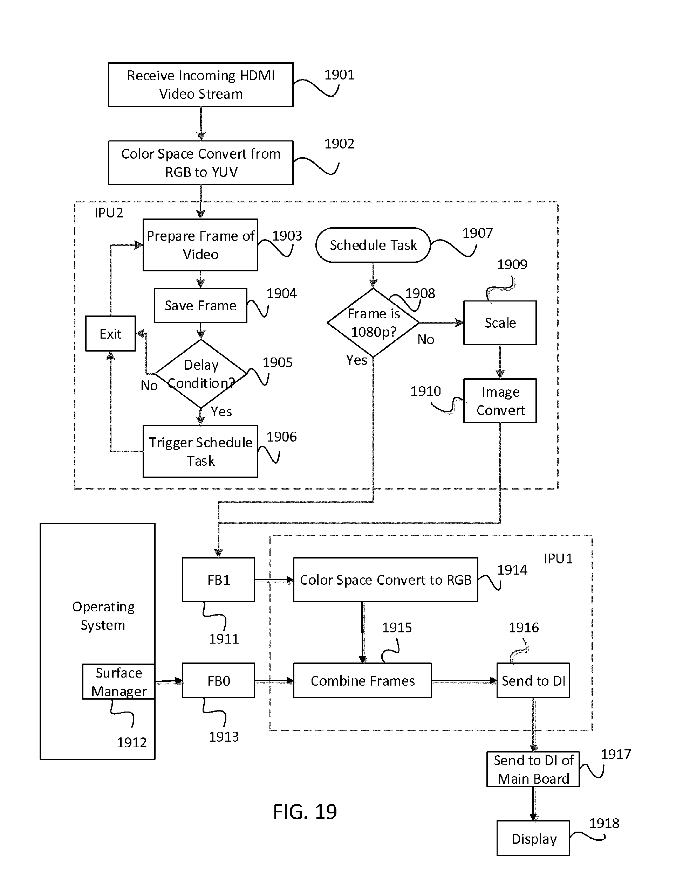

FIG. 19 is a flowchart of method steps for delaying the display of a video stream, according to one embodiment of the invention. The display of a video stream may be delayed to synchronize the video playback with the playback of an audio signal or other use cases. In step 1901, an incoming HDMI video stream in RGB 4:4:4 format is received at one of HDMI input connectors 26, 27, 28. In step 1902, HDMI input unit 125 color space converts the incoming HDMI video stream to YUV 4:2:2 format for input to an IPU2 240 of processor 110 via the CSI input port. In step 1903, IPU2 240 receives the video data and prepares a frame of video. In step 1904, IPU2 240 saves the frame of video in a buffer of DDR memory 111. In step 1905, IPU2 240 determines whether the delay condition has been reached. For example, if the incoming video is at 60Hz, 60 frames per second and a desired delay is 0.5 seconds, in step 1905 IPU2 240 determines whether the current frame is "30 frames behind," and if so, then in step 1906, the operating system initiates a schedule task for displaying the first stored frame and delivers instructions to execute the schedule task to CPU2 200, and IPU2 240 performs the scheduled task to display the first stored frame. If not, the method returns to step 1903 where the IPU2 240 prepares the next frame. The frames are stored in the buffer of DDR memory 11 in step 1904 so that the system can return to a real-time, undelayed display.

In step 1907, the scheduled task to process a frame of video begins. In step 1908, IPU2 240 determines whether the frame of video is a 1080p frame. If the frame is 1080p, IPU2 240 sends the frame to FB1 261. If the frame is not 1080p, in steps 1909 and 1910 IPU2 240 scales the frame into a 1080p frame and sends the frame to FB1 261. In step 1911 FB1 261 stores the frame until it is to be displayed.

In step 1912, the surface manager of the operating system sends a multilayered application surface to FB0 260. In step 1913, FB0 260 stores the multilayered application surface until it is to be displayed. In step 1914, the display processor of IPU1 240 fetches a frame of video from FB1 261 and color scale converts the frame into an RGB format. In step 1915 the display processor combines the RGB frame with a multilayered application surface fetched from FB0 260. In step 1916 a display interface of IPU1 240 outputs the combined frame to display interface 30 of main board 100. In step 1917, display interface 30 sends the combined frame to flat panel display 10. In step 1918, flat panel display 10 displays the combined frame.

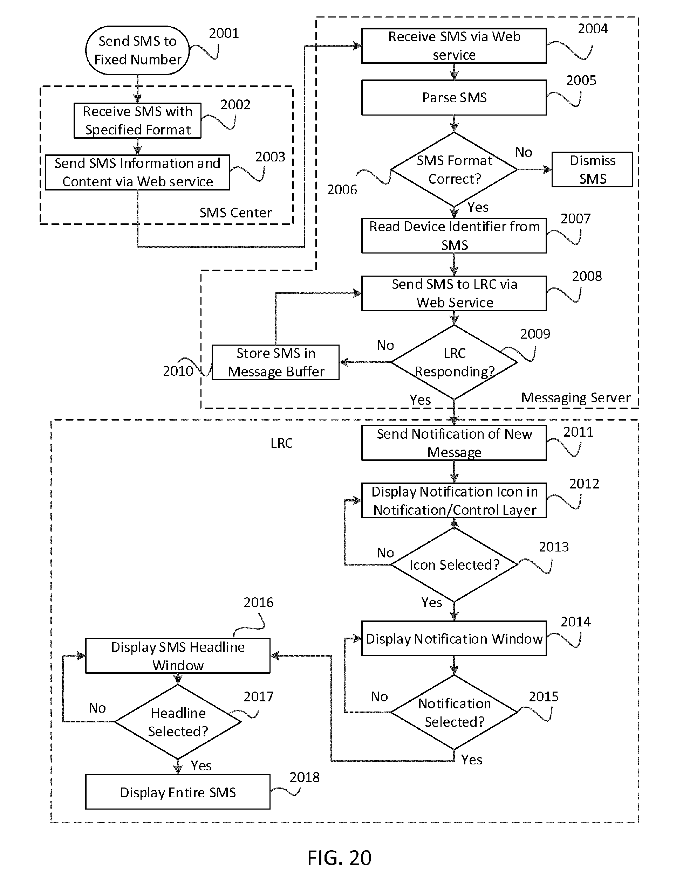

FIG. 20 is a flowchart of method steps for transmitting a message to the LRC using a short messaging service (SMS), according to one embodiment of the invention. The LRC can receive SMS messages from another LRC or from any other device capable of sending SMS messages via a wireless carrier. In step 2001, a mobile device capable of delivering a SMS message, such as a mobile phone, sends a SMS message to a fixed number associated with the unique device identifier of the LRC. In step 2002, a SMS center receives the SMS message and verifies that it is in the proper format. The SMS center includes a SIM (subscriber identity module) card issued by a wireless carrier so that the SMS center can send and receive messages on the wireless carrier's network. In step 2003, the SMS center transmits the SMS message to a messaging server through a compatible computer network, such as the Internet, LAN, WAN, or any other known network systems using known protocols for such systems, including TCP/IP. The messaging server receives the SMS message in step 2004 and, in step 2005, parses the SMS message. In step 2006, the messaging server verifies that the parsed SMS message is in a correct format and contains the requisite unique device identifier of the LRC. If the SMS message is not in a correct format or does not contain the unique device identifier, the messaging server dismisses the SMS message and the SMS message will not be delivered. If the SMS message is in the correct format, then in step 2007, the messaging server reads the unique device identifier (such as the XOS_ID) contained in the SMS message.

In step 2008, the messaging server sends the SMS message to the LRC associated with the unique device identifier via a Web service through a compatible computer network, such as the Internet, LAN, WAN, or any other known network systems using known protocols for such systems, including TCP/IP. In step 2009, the messaging server checks to see if the LRC is responding. If the LRC is not responding, then in step 2010, the SMS message is stored in a message buffer within the messaging server, and the messaging server will attempt to re-deliver the SMS message to the LRC as described in step 2008. If the LRC is responding, then in step 2011 the LRC receives the SMS message and the operating system generates a notification indicating receipt of a new SMS message. In step 2012, new message notification icon, such as icon 350 shown in FIG. 8, is displayed in application and/or control layer 361. In step 2013, the operating system determines if a user has selected the new message notification icon. In step 2014, in response to a user selection of the notification icon, a messaging application displays a SMS notification application window in the application and/or control layer 361. In step 2015, the messaging application determines if a user has selected a messaging notification item within the SMS notification application window. In step 2016, in response to a user selection of a messaging notification item, the messaging application displays a messaging headline application window, which displays a portion of the SMS message. The messaging headline application window is an element of application and/or control layer 361. In step 2017, the messaging system determines whether a user has selected a SMS message headline. If a user has selected a SMS message headline, in step 2018 the messaging application displays the entire SMS message in a messaging application window that is an element of application and/or control layer 361.

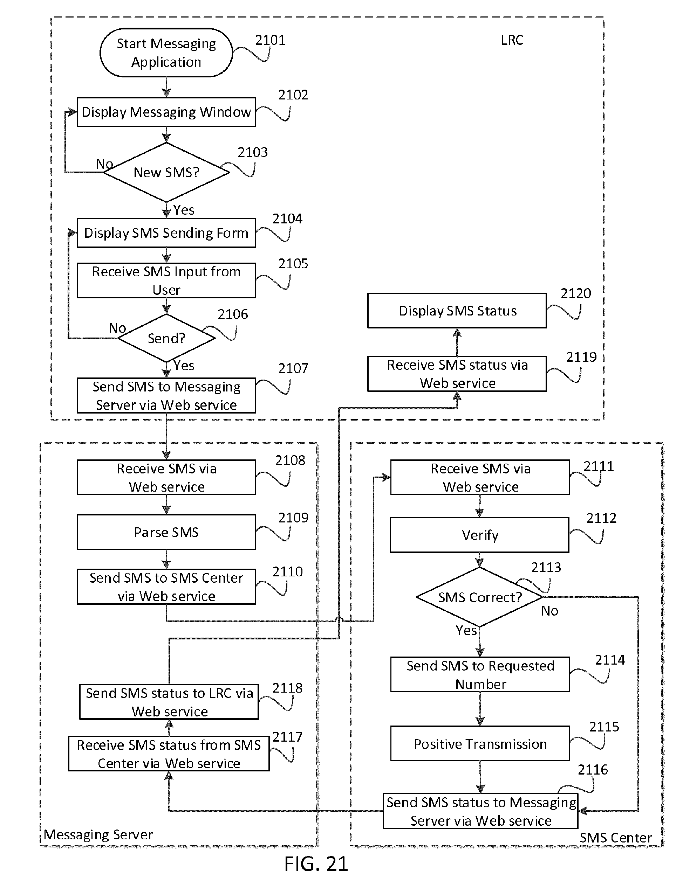

FIG. 21 is a flowchart of method steps for transmitting a SMS message from the LRC, according to one embodiment of the invention. The LRC can send SMS messages to another LRC or to any other device capable of receiving SMS messages via a wireless carrier. In step 2101, a user may start a messaging application on the LRC. In step 2102, the messaging application creates a messaging application window that is displayed as an element of application and/or control layer 361. In step 2103, the messaging application determines if a user has created a new SMS message by selecting a button within the messaging application window recognized by the operating system as being associated with creating SMS messages, such as a telephone icon. In step 2104, in response to a user clicking the telephone icon, the messaging application displays a SMS sending form in the messaging application window. In step 2105, the messaging application receives a phone number and message input by the user into the SMS sending form. In step 2106, the messaging application determines whether the user has selected a button within the messaging application window recognized by the operating system as being associated with sending SMS messages. In step 2107, the LRC sends the SMS message to a messaging server via a Web service, such as for example Google Cloud Messaging.

In step 2108, the messaging server receives the SMS message transmitted from the LRC via the Web service over a compatible computer network. In steps 2109 and 2110, the messaging server parses the SMS message and sends the parsed SMS message to the SMS center via the Web service. But if the SMS message is addressed to another LRC, the messaging server sends the SMS message to the other LRC via the Web service as in steps 2004-2010 of FIG. 20. In step 2111, the SMS center receives the SMS message from the messaging server via the Web service. In steps 2112 and 2113, the SMS center verifies that the SMS message is in the correct format. If the SMS message is in the correct format, then in steps 2114 and 2115 the SMS center transmits the SMS message to the device associated with the phone number specified by the user in the SMS sending form, and the SMS center updates a SMS transmission status as being positive. If the SMS message is not in the correct format, then the SMS center does not transmit the SMS message, and the SMS center updates the SMS transmission status as being negative. In step 2116, the SMS center transmits the SMS transmission status via a compatible computer network to the messaging server. In step 2117, the messaging server receives the SMS status via the Web service. In step 2118, the messaging server transmits the SMS transmission status via a compatible computer network to the LRC. In step 2119, the LRC receives the SMS status via the Web service. In step 2120, the LRC displays the SMS transmission status in the messaging application window.

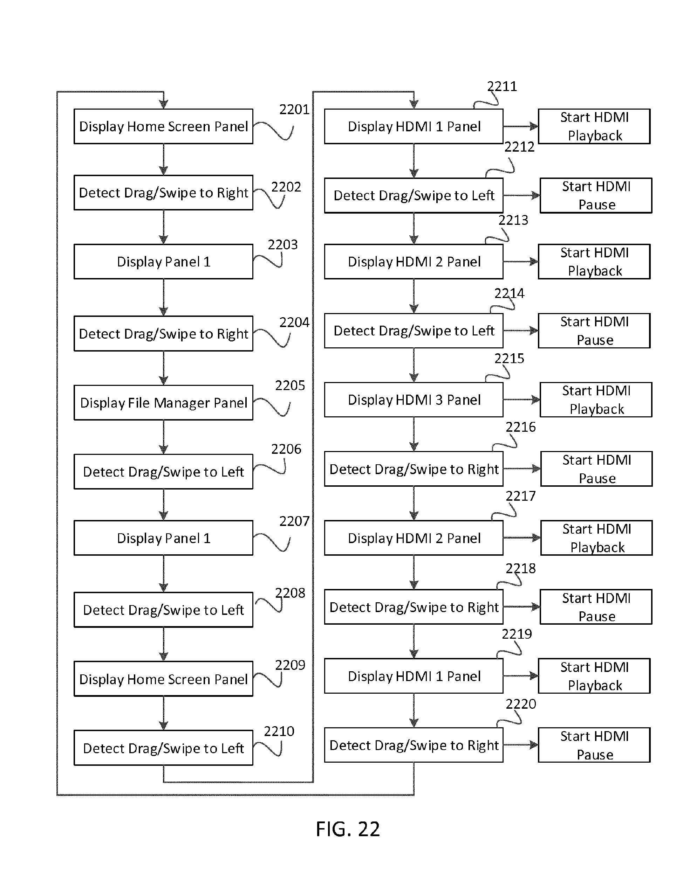

FIG. 22 is a flowchart of method steps for navigating the display panels of the LRC by swiping to the left or right, according to one embodiment of the invention. In step 2201, a home screen panel is displayed on flat panel display 10. In one embodiment, the home screen is a standard Android-based operating system home screen that can include application-link thumbnails of the user's most used or "favorite" applications. In steps 2202 and 2203, in response to a swipe of cursor 345 to the right via a signal from a mouse, a panel 1 is displayed on flat panel display 10. Panel 1 is a standard operating system applications screen from which applications and programs can be launched and displayed. For example, in one embodiment, panel 1 is a standard Android-based operating system screen from which a user may launch applications or display widgets. In steps 2204 and 2205, in response to a swipe of cursor 345 to the right, a file manager panel is now displayed on flat panel display 10. The file manager panel is an application to display, manage, and browse files on the LRC, such as files stored on mass storage device 11 or on an external storage device connected to the LRC via external USB connectors 20, 21, 22. The file manager panel is also accessible by selecting an application-link thumbnail shown in the home screen, the applications screen, and or the control menu (not shown). In steps 2206 and 2207, in response to a swipe of cursor 345 to the left, panel 1 is now re-displayed on flat panel display 10. In steps 2208 and 2209, in response to a swipe of cursor 345 to the left, the home screen panel is now re-displayed on flat panel display 10.

In steps 2210 and 2211, in response of a swipe of cursor 345 to the left, a HDMI 1 panel is now displayed on flat panel display 10. When the HDMI 1 panel is displayed, the operating system initiates playback of audiovisual data from HDMI input source 391. In steps 2212 and 2213, in response to a swipe of cursor 345 to the left, the operating systems pauses the playback of audiovisual data from HDMI input source 391, and a HDMI 2 panel is now displayed on flat panel display 10. When the HDMI 2 panel is displayed, the operating system initiates playback of audiovisual data from HDMI input source 390. In steps 2214 and 2215, in response a swipe of cursor 345 to the left, the operating system pauses the playback of audiovisual data from HDMI input source 390, and a HDMI 3 panel is now displayed on flat panel display 10. When the HDMI 3 panel is displayed, the operating system initiates playback of audiovisual data from HDMI input source 392.

In steps 2216 and 2217, in response to a swipe of cursor 345 to the right, the operating system pauses the streaming of audiovisual data from HDMI input source 392, the HDMI 2 panel is re-displayed on the flat panel display 10, and the streaming of audiovisual data from HDMI input source 390 is resumed. In steps 2218 and 2219, in response to a swipe of cursor 345 to the right, the streaming of audiovisual data from HDMI input source 390 is paused, the HDMI 1 panel is re-displayed on the flat panel display 10, and the streaming of audiovisual data from HDMI input source 391 is resumed. In step 2220, in response to a swipe of cursor 345 to the right, the streaming of audiovisual data from HDMI input source 391 is paused, and the home screen panel is re-displayed on flat panel display 10.

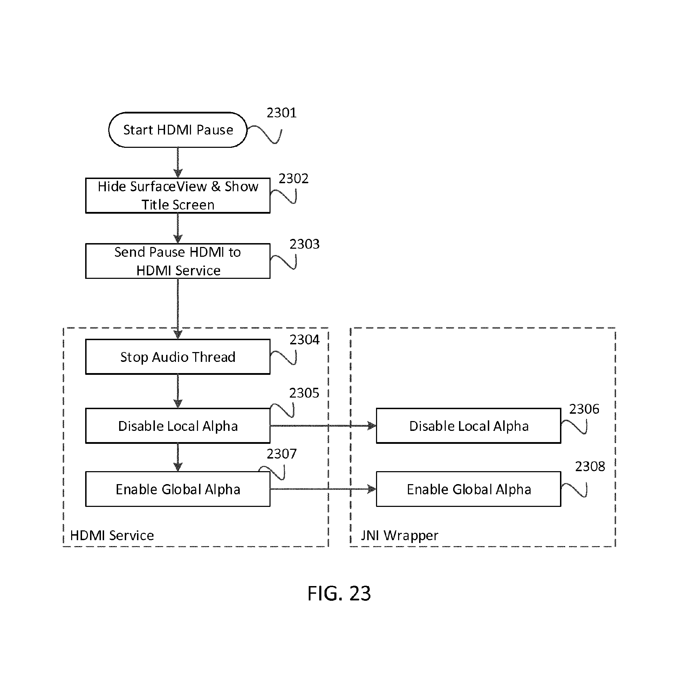

FIG. 23 is a flowchart of method steps for pausing the streaming of audiovisual data from HDMI input sources 390, 391, 392, according to one embodiment of the invention. In step 2301, in response to a swipe of cursor 345 to the left or right from one of the HDMI 1, 2, 3 panels, an HDMI pause is triggered on the corresponding stream of audiovisual data from the respective HDMI input source 390, 391, or 392. In steps 2302 and 2303, in response to the HDMI pause being triggered, a special black surface view for color keying and title screen may be displayed, and a pause HDMI command is transmitted to an HDMI service. The HDMI service is a software application, running in the background, which manages all aspects of the HDMI features of the LRC. In step 2304, the HDMI service stops the audio thread from the respective HDMI input source. In step 2305, the HDMI service disables a Local Alpha, which is an 8-bit value used by the display processor of processor 110 to create transparent overlays for individual display pixels. In step 2305, the HDMI service instructs a Java Native Interface (JNI) Wrapper, which provides libraries of native application programming interfaces (API's) and methods of low level system control, to disable the Local Alpha in step 2306. In step 2307, the HDMI service enables a Global Alpha, which is an 8-bit value used by the display processor of processor 110 to create transparent overlays for all display pixels. In step 2307, the HDMI service instructs the JNI Wrapper to enable the Global Alpha.

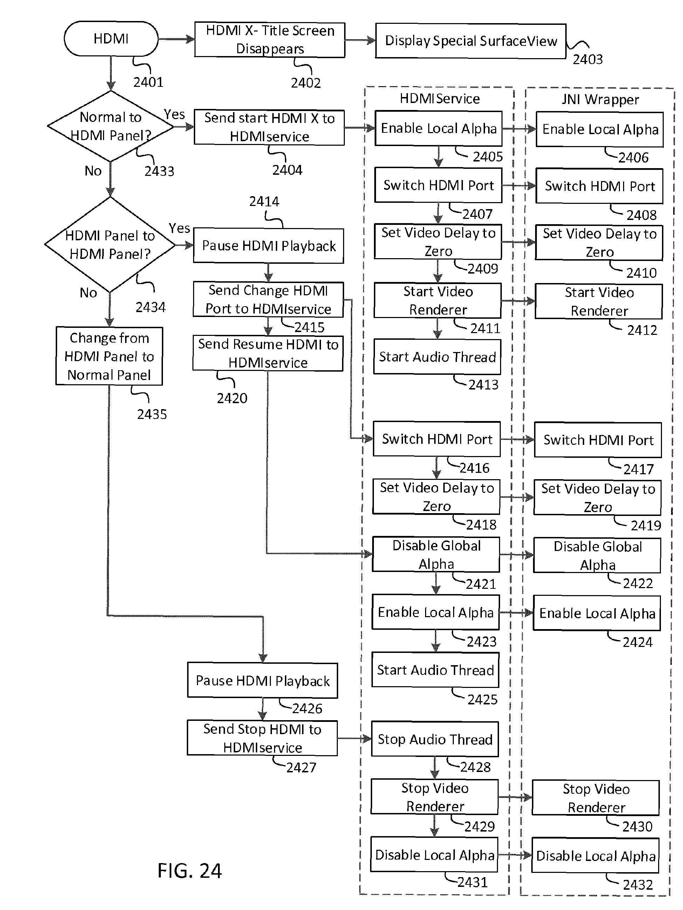

FIG. 24 is a flowchart of method steps for pausing and resuming the streaming of audiovisual data from HDMI input sources 390, 391, 392, according to one embodiment of the invention. In step 2401, audiovisual data from one of the HDMI input sources 390, 391, 392 begins streaming. In step 2402, the corresponding title screen of the streaming audiovisual data disappears, and in step 2403, the special black surface view for color keying is displayed. In step 2433, the operating system determines whether a user has changed the display from a normal panel, such as the home screen panel, to an HDMI panel. In step 2404, in response to a change from a normal panel to one of the HDMI 1, 2, 3 panels, a start HDMI command is delivered to the HDMI service. In response to receiving the start HDMI command, the HDMI service enables the Local Alpha in step 2405, which in turn triggers the JNI Wrapper to enable the Local Alpha in step 2406. In step 2407, the HDMI service switches to the proper HDMI input source 390, 391, or 392. The HDMI service instructs the JNI Wrapper to switch to the proper HDMI input source 390, 391, or 392 in step 2408. In step 2409, the HDMI service sets any associated video delay to 0, and instructs the JNI Wrapper to set any associated video delay to 0 in step 2410. In step 2411, the HDMI service starts a video renderer, a program that processes the audiovisual data for display, and instructs the JNI Wrapper to start the video renderer in step 2412. In step 2413, the HDMI service begins streaming the audio thread.

In step 2433, the operating system determines whether a user has changed the display from one of the HDMI 1, 2, or 3 panels to a different HDMI panel. In step 2414, in response to a change from one of the HDMI 1, 2, 3 panels to a different HDMI panel, HDMI pause is triggered on the HDMI input source of the previous HDMI panel by the method as described in FIG. 23. For example, when a user changes the displayed panel from HDMI 1 panel to HDMI 2 panel, HDMI pause is triggered for HDMI 1 panel. In steps 2415 and 2416, the HDMI service receives a change HDMI port command and the HDMI service switches to the appropriate HDMI port, which in turn triggers the JNI Wrapper to switch to the appropriate HDMI port in step 2417. In steps 2418 and 2419, both the HDMI service and the JNI Wrapper set the video delay to 0. In step 2420, a resume HDMI command is sent to HDMI service. In steps 2421 and 2422, both the HDMI service and the JNI Wrapper disable the Global Alpha. In steps 2423 and 2424, the Local Alpha is enabled by both the HDMI service and JNI Wrapper. In step 2425, the HDMI service starts the audio thread.

In step 2435, the operating system detects that a user has changed the display from an HDMI panel to a normal panel. In step 2426, in response to a change from one of the HDMI 1, 2, 3 panels to a normal panel, HDMI pause is triggered on the HDMI input source of the previous HDMI panel. In step 2427, a stop signal is sent to the HDMI service. In step 2428, the HDMI service stops the audio thread from the respective HDMI input source. In step 2429, the HDMI service stops a video renderer. In step 2430, the HDMI service instructs a JNI Wrapper to stop a video renderer. In step 2431, the HDMI services disables a Local Alpha. In step 2432, the HDMI service instructs the JNI Wrapper to disable the Local Alpha.

The invention has been described above with reference to specific embodiments. It will, however, be evident that various modifications and changes may be made thereto without departing from the broader spirit and scope of the invention as set forth in the appended claims. The foregoing description and drawings are, accordingly, to be regarded in an illustrative rather than a restrictive sense.

## Claims

1. A computing device comprising:
a housing, the housing including a small form-factor pluggable (SFP) port;
a SFP cage coupled to the SFP port, the SFP cage configured to receive a SFP transceiver;
a flat-panel display screen coupled to the housing; and
a main board coupled to the flat-panel display screen, the main board including a processor, a memory, and an SFP interface coupled to the SFP cage and to the processor,
the processor configured to receive data from the SFP interface and process the data for display on the flat-panel display screen.

2. The computing device of claim 1, wherein the SFP cage is configured to receive a SFP transceiver that is configured to be directly coupled to an optical fiber.

3. The computing device of claim 2, wherein the SFP cage is configured to communicate with an active optical network.

4. The computing device of claim 2, wherein the SFP cage is configured to communicate with a passive optical network.

5. The computing device of claim 1, wherein the SFP cage is configured to receive a SFP transceiver that is configured to be directly coupled to a copper wire.

6. The computing device of claim 5, wherein the SFP cage is configured to communicate with an Ethernet network.

7. The computing device of claim 1, further comprising an Android-based operating system stored in the memory and executable by the processor.

8. A computing device comprising:
a housing, the housing including a small form-factor pluggable (SFP) port;
a SFP cage coupled to the SFP port, the SFP cage configured to receive a SFP transceiver;
a flat-panel display screen coupled to the housing; and
a main board coupled to the flat-panel display screen, the main board including a processor, a memory, a wireless module, and an SFP interface coupled to the SFP cage and to the processor,
the processor configured to receive data from the SFP interface and process the data for transmission by the wireless module.

9. The computing device of claim 8, wherein the SFP cage is configured to receive a SFP transceiver that is configured to be directly coupled to an optical fiber.

10. The computing device of claim 9, wherein the SFP cage is configured to communicate with an active optical network.

11. The computing device of claim 9, wherein the SFP cage is configured to communicate with a passive optical network.

12. The computing device of claim 8, wherein the SFP cage is configured to receive a SFP transceiver that is configured to be directly coupled to a copper wire.

13. The computing device of claim 12, wherein the SFP cage is configured to communicate with an Ethernet network.

14. The computing device of claim 8, wherein the wireless module is compliant with the IEEE 802.11 standard.

15. The computing device of claim 14, wherein the memory stores software executable by the processor such that the computing device operates as an IEEE 802.11 access point.

16. The computing device of claim 8, further comprising an Android-based operating system stored in the memory and executable by the processor.
